# EUROPÄISCHE PATENTSCHRIFT

(11) **EP 2 466 227 B1**
(45) Veröffentlichungstag und Bekanntmachung des Hinweises auf die Patenterteilung: **03.04.2013**
(21) Anmeldenummer: 10015799.9
(22) Anmeldetag: 18.12.2010
(51) Int. Cl.: F24J 2/52, H01L 31/042

(54) **Vorrichtung zur Anordnung von Solarpaneelen und/oder Wärmekollektoren auf einem Untergrund sowie ein Verfahren zur Herstellung einer solchen Vorrichtung**
Device for assembling solar panels and/or heat collectors on a base and a method for producing such a device
Dispositif d'agencement de panneaux solaires et/ou de collecteurs de chaleur sur un sous-sol ainsi que procédé de fabrication d'un tel dispositif

(43) Veröffentlichungstag der Anmeldung: 20.06.2012
(73) Patentinhaber: Hafenbahn GmbH & Co. KG, 48431 Rheine (DE)
(72) Erfinder: Brinkmann, Manfred, 48431 Rheine (DE); Haase, Peer, 48429 Rheine (DE)
(74) Vertreter: Berkenbrink, Kai-Oliver

(56) Entgegenhaltungen:
- EP-A1- 1 104 029
- JP-A- 2000 208 802
- JP-A- 2003 008 045
- JP-A- 2004 014 887

## Beschreibung

Die Erfindung betrifft eine Vorrichtung zur Anordnung von Solarpaneelen und/oder Wärmekollektoren auf einem Untergrund sowie ein Verfahren zur Herstellung einer solchen Vorrichtung.

Unter den Begriffen Solarpaneele und Wärmekollektoren werden hierin ganz allgemein Vorrichtungen verstanden, mit deren Hilfe Sonnenenergie nutzbar gemacht werden kann. Dabei können Solarpaneele und Wärmekollektoren, wie aus dem Stand der Technik bekannt, insbesondere als tafelförmige Elemente vorliegen. Solarpaneele können beispielsweise Photovoltaikanlagen sein, mit deren Hilfe Sonnenenergie in elektrische Energie umgewandelt werden kann. Wärmekollektoren können insbesondere Vorrichtungen sein, mit deren Hilfe Wasser durch Sonnenenergie erhitzbar ist.

Solarpaneele und Wärmekollektoren werden bevorzugt schräg zu einer horizontalen Ebene angeordnet, so dass die Sonnenstrahlung in einem möglichst steilen Winkel auf die Solarpaneele und Wärmekollektoren fällt.

Zur schrägen Anordnung von Solarpaneelen und Wärmekollektoren auf einem Untergrund, insbesondere beispielsweise auf einem Flachdach, werden daher solche Vorrichtungen benötigt, an denen die Solarpaneele und Wärmekollektoren in einer schrägen Stellung anordenbar sind.

Mittel zur Errichtung entsprechender Vorrichtungen sind aus dem Stand der Technik bekannt. Übliche Mittel zur Errichtung solcher Vorrichtungen umfassen üblicherweise ein erstes, insbesondere rahmenartiges Vorrichtungsteil, das auf einen Untergrund auflegbar ist, und ein zweites Vorrichtungsteil, das in einer schrägen Stellung zum ersten Vorrichtungsteil halterbar ist. Die Solarpaneele und Wärmekollektoren sind anschließend an dem zweiten Vorrichtungsteil in einer schrägen Stellung anordenbar.

Die Mittel zur Errichtung solcher Vorrichtungen, also insbesondere die vorbezeichneten Vorrichtungsteile, sind üblicherweise aus Strahlprofilen gefertigt.

Entsprechende Vorrichtungen haben sich grundsätzlich zwar bewährt. Nachteilig ist jedoch, dass die Herstellung der Stahlprofile für die Vorrichtung relativ aufwendig und kostenintensiv ist. Nachteilig ist ferner, dass die Errichtung der Vorrichtung aus den vorbeschriebenen Mitteln verhältnismäßig aufwendig ist, wobei zudem häufig zusätzliche Befestigungsmittel zur Befestigung der Vorrichtung an dem Untergrund notwendig sind. Dies kann insbesondere bei der Errichtung der Vorrichtungen auf einem Flachdach nachteilig sein, da die Dachhaut hierfür beschädigt werden muss. Nachteilig ist schließlich auch, dass das zweite Vorrichtungsteil häufig nur kompliziert in eine definierte schräge Stellung zum ersten Vorrichtungsteil bringbar und in dieser Stellung halterbar ist.

Zur teilweisen Überwindung dieser Hindernisse sind aus dem Stand der Technik Kunststoffboxen bekannt, auf deren Oberseite Solarpaneele oder Wärmekollektoren in einer definierten Schrägstellung anordenbar sind. Solche Kunststoffboxen sind wesentlich einfacher und kostengünstiger herstell- und aufstellbar als die vorbezeichneten Vorrichtungen aus Stahlprofilen. Vorteilhaft an solchen Kunststoffboxen ist ferner, dass diese nicht über Befestigungsmittel an einem Untergrund befestigt werden müssen. Vielmehr werden solche Kunststoffboxen üblicherweise mit Lastmitteln beschwert, so dass sie witterungsunabhängig aufstellbar sind. Als Lastmittel sind insbesondere Kies, Sand oder Steinplatten bekannt, mit denen die Kunststoffboxen gefüllt werden. Eine Vorrichtung in Form einer solchen Kunststoffbox ist beispielsweise aus DE 698 15 086 T2 bekannt. EP 1 862 748 A2 beschreibt eine längenverstellbare Kunststoffbox. Der Ausrichtungswinkel der auf solche Boxen montierten Solarpaneele oder Wärmekollektoren wird durch die Neigung der beiden abfallenden Seitenwände der Box bestimmt.

Kunststoffboxen zur Anordnung von Solarpaneelen und Wärmekollektoren auf einem Untergrund haben sich zwar grundsätzlich bewährt. Verbesserungsbedürftig ist jedoch die Handhabbarkeit solcher Vorrichtungen zur Anordnung von Solarpaneelen und Wärmekollektoren. So benötigen die bekannten Kunststoffboxen, auch soweit diese stapel- und schachtelbar sind, ein verhältnismäßig hohes Transportvolumen. Ferner lassen sich solche Kunststoffboxen auf Grund ihrer raumgreifenden Maße bei ihrer Aufstellung nur schwer handhaben.

Als nächstkommender Stand der Technik wurde eine Vorrichtung nach Dokument JP 2003-8045 A ermittelt.

Der Erfindung liegt die Aufgabe zu Grunde, eine Vorrichtung zur Anordnung von Solarpaneelen und/oder Wärmekollektoren auf einem Untergrund zur Verfügung zu stellen, die besser handhabbar ist als die aus dem Stand der Technik bekannten Vorrichtungen, insbesondere auch die aus dem Stand der Technik bekannten Vorrichtungen in Form von Kunststoffboxen. Dabei sollen die Vorrichtungen insbesondere zum einen ein geringeres Transportvolumen benötigen und zum anderen bei ihrer Aufstellung weniger raumgreifend sein, so dass sie leichter zu handhaben sind.

Ferner liegt der Erfindung die Aufgabe zu Grunde, ein Verfahren zur Herstellung einer solchen Vorrichtung zur Verfügung zu stellen.

Zur Lösung der erstgenannten Aufgabe wird erfindungsgemäß vorgeschlagen eine Vorrichtung zur Anordnung von Solarpaneelen und/oder Wärmekollektoren auf einem Untergrund mit folgenden Merkmalen:
- einem plattenförmigen Bodenteil, durch das die Vorrichtung auf einen Untergrund aufstellbar ist;
- zwei plattenförmigen Dachteilen, die in Form eines Satteldaches an dem Bodenteil befestigt sind;
- wenigstens eines der Dachteile ist zur Anordnung von Solarpaneelen und/oder Wärmekollektoren ausgebildet;
- die Dachteile sind firstseitig entlang einer Knickkante, die eine Verschwenkung der Dachteile gegeneinander ermöglicht, miteinander verbunden;
- die Dachteile sind fußseitig jeweils entlang einer Knickkante, die jeweils eine Verschwenkung des betreffenden Dachteils gegenüber dem Bodenteil ermöglicht, mit dem Bodenteil verbunden;
- das Bodenteil weist eine Knickkante auf, entlang derer das Bodenteil knickbar ist;
- die Knickkante des Bodenteils ist derart angeordnet, dass die Vorrichtung zusammenklappbar ist.

Die Erfindung beruht auf der Grundüberlegung, eine Vorrichtung zur Anordnung von Solarpaneelen und/oder Wärmekollektoren auf einem Untergrund zur Verfügung zu stellen, die flach zusammenklappbar und wieder aufklappbar ist. Dies ermöglicht es, die Vorrichtung insbesondere für deren Transport flach zusammen zu klappen, sie in dieser Stellung an den Ort ihrer Aufstellung zu transportieren und die Vorrichtung dort wieder aufzuklappen. In der aufgeklappten Stellung der Vorrichtung können anschließend Solarpaneele und/oder Wärmekollektoren an der Vorrichtung befestigt werden.

Die Zusammenklappbarkeit der Vorrichtung wird durch die erfindungsgemäße spezifische Konfektionierung der Vorrichtung aus einem klappbaren Bodenteil und zwei klappbar miteinander verbundenen Dachteilen, die zudem über Knickkanten mit dem Bodenteil in Verbindung stehen, ermöglicht.

Konkret wird die Zusammenklappbarkeit der Vorrichtung dadurch ermöglicht, dass sowohl das Bodenteil, als auch das auf diesem befestigte Dach aus den Dachteilen jeweils zusammenklappbar ist. Diese Konfektionierung ermöglicht es, dass die Vorrichtung mit jeweils nur einer Bewegung zusammengeklappt und wieder aufgeklappt werden kann. Dabei müssen durch den Anwender der Vorrichtung keinerlei Teile miteinander verbunden oder gegeneinander ausgerichtet werden, so dass eine fehlerhafte Aufstellung der Vorrichtung durch den Anwender nicht möglich ist. Vielmehr muss der Anwender die zusammengeklappte Vorrichtung nur auseinanderklappen und anschließend mit dem Bodenteil auf einen Untergrund aufstellen.

Besonders vorteilhaft an der Vorrichtung ist auch, dass die Zusammenklappbarkeit und Aufklappbarkeit der Vorrichtung reversibel ist. So kann die einmal aufgeklappte und auf einen Untergrund aufgestellte Vorrichtung jederzeit wieder zusammengeklappt werden, beispielsweise um sie an einen anderen Ort zu transportieren und dort wieder aufstellen zu können.

Das Bodenteil der Vorrichtung hat insbesondere zwei Funktionen. Zum einen dient es der Aufstellung der (aufgeklappten) Vorrichtung auf einem Untergrund. Zum zweiten dient das Bodenteil als Aufspreiz- und Haltemittel für die beiden Dachteile. So werden die beiden Dachteile bei der Aufklappung des Bodenteils zur Dachform aufgespreizt und durch das aufgeklappte Bodenteil in Form eines Satteldaches gehalten. Bevorzugt weist das Bodenteil eine rechteckige Außenkontur auf, also die Form einer rechteckigen Platte.

Die an dem Bodenteil befestigten, plattenförmigen Dachteile in Form eines Satteldaches haben die Aufgabe, Solarpaneele und/oder Wärmekollektoren aufzunehmen, wenn die Vorrichtung über das Bodenteil auf einen Untergrund aufgestellt ist. Wenigstens eines der Dachteile ist daher zur Anordnung von Solarpaneelen und/oder Wärmekollektoren ausgebildet.

Die plattenförmigen Dachteile sind in Form eines Satteldaches an dem Bodenteil befestigt. Mit anderen Worten: Die beiden Dachteile sind zum einen entlang einer gemeinsamen Knickkante knickbar miteinander verbunden und zum anderen an den dieser gemeinsamen Knickkante jeweils gegenüberliegenden Enden jeweils entlang einer weiteren Knickkante knickbar mit dem Bodenteil verbunden. Wenigstens eines der Dachteile verläuft dabei mit Neigung zum Bodenteil.

Die Dachteile können in Form eines symmetrischen oder asymmetrischen Satteldachs an dem Bodenteil befestigt sein. Bei einem symmetrischen Satteldach weisen die Dachteile eine gleiche Größe auf, während sie bei einem asymmetrischen Satteldach eine ungleiche Größe aufweisen.

Die Neigung der Dachteile zur Bodenplatte - und damit zum Untergrund - ist durch die Dimensionierung der Vorrichtung vorgegeben. Bevorzugt ist wenigstens eines der Dachteile in einem solchen Winkel zum Bodenteil geneigt, in welchem Solarpaneele und/oder Wärmekollektoren bevorzugt zur Sonne ausgerichtet werden. Dies hat den Vorteil, dass die Solarpaneele und/oder Wärmekollektoren unmittelbar an wenigstens einem der Dachteile mit der gewünschten Neigung an diesem angeordnet werden können, ohne dass die Neigung bauseitig gesondert eingestellt werden müsste. Beispielsweise kann vorgesehen sein, dass wenigstens eines der Dachteile in einem Winkel zwischen 20° und 35°, besonders bevorzugt beispielsweise in einem Winkel von 25° bis 30° zum Bodenteil geneigt ist.

Bevorzugt weisen die Dachteile jeweils eine rechteckige Außenkontur auf, also jeweils die Form einer rechteckigen Platte.

Soweit auch das Bodenteil die Form einer rechteckigen Platte aufweist, ist bevorzugt vorgesehen, dass die Dachteile im Bereich gegenüberliegender Seitenkanten des Bodenteils an diesem befestigt sind. Demnach verlaufen die beiden Knickkanten, entlang derer die Dachteile mit dem Bodenteil verbunden sind, parallel zueinander. Weiter verläuft bevorzugt die Knickkante des Bodenteils parallel zu diesen Knickkanten, entlang derer die Dachteile mit dem Bodenteil verbunden sind. Ferner verläuft bevorzugt die firstseitige Knickkante, also die Knickkante entlang derer die Dachteile miteinander verbunden sind, parallel zu den Knickkanten, entlang derer die Dachteile mit dem Bodenteil verbunden sind.

Nach einer besonders bevorzugten Ausführungsform verlaufen die firstseitige Knickkante der Dachteile, die fußseitigen Knickkanten, entlang derer die Dachteile mit dem Bodenteil verbunden sind, und die Knickkante des Bodenteils parallel zueinander. Dies ermöglicht eine besonders einfache Zusammenklappbarkeit und Ausklappbarkeit der Vorrichtung.

Soweit die Dachteile die Form eines symmetrischen Satteldaches aufweisen, verläuft die Knickkante des Bodenteils parallel zu den Knickkanten, entlang derer die Dachteile mit dem Bodenteil verbunden sind, in der Mitte des Bodenteils.

Soweit die Dachteile die Form eines asymmetrischen Satteldaches aufweisen, verläuft die Knickkante des Bodenteils parallel zu den Knickkanten, entlang derer die Dachteile mit dem Bodenteil verbunden sind, jedoch außermittig des Bodenteils.

Nach einer besonders bevorzugten Ausführungsform besteht die Vorrichtung aus Kunststoff. Demnach bestehen das Bodenteil und die Dachteile der Vorrichtung aus Kunststoff.

Besonders vorteilhaft an einer solchen Vorrichtung aus Kunststoff ist, dass diese äußerst kostengünstig und einfach herstellbar ist. Gleichzeitig hat Kunststoff den Vorteil einer hohen Witterungs- und Korrosionsbeständigkeit.

Nach einer bevorzugten Ausführungsform bestehen das Bodenteil und die Dachteile der Vorrichtung aus einem thermoplastischen Kunststoff, besonders bevorzugt aus Polypropylen (PP), aufgrund seiner guten Verschleißfestigkeit. Alternativ können die Komponenten der Vorrichtung beispielsweise auch aus Polyethylen (PE) oder Polystyrol (PS) erstellt sein.

Gemäß einer bevorzugten Ausführungsform ist vorgesehen, dass die Vorrichtung aus wenigstens einer Kunststoffstrukturkammerplatte erstellt ist.

Danach bestehen das Bodenteil und die Dachteile der Vorrichtung aus wenigstens einer Kunststoffstrukturkammerplatte.

Kunststoffstrukturkammerplatten sind besonders einfach und kostengünstig herstellbar und weisen gleichzeitig eine hohe Festigkeit auf.

Kunststoffstrukturkammerplatten bestehen aus zwei ebenen Kunststoffdeckschichten zwischen denen eine strukturierte Kunststoffmittelschicht angeordnet ist. Die Kunststoffmittelschicht kann beispielsweise genoppt oder profiliert ausgebildet sein. In ihrem Aufbau ähneln Kunststoffstrukturkammerplatten damit dem Aufbau von Wellpappe.

Kunststoffstrukturkammerplatten zeichnen sich durch eine sehr hohe Festigkeit, insbesondere eine hohe Biegesteifigkeit, bei einem gleichzeitig nur verhältnismäßig nur geringen Gewicht auf. Erfindungsgemäß hat sich herausgestellt, dass entsprechende Kunststoffstrukturkammerplatten hervorragend zur Errichtung der erfindungsgemäßen Vorrichtung geeignet sind.

Zur Errichtung der erfindungsgemäßen Vorrichtung können Kunststoffplatten, insbesondere Kunststoffkammerstrukturplatten, bevorzugt mit einer Dicke im Bereich von 2 bis 14 mm vorgesehen sein, besonders bevorzugt mit einer Dicke im Bereich von 4 bis 10 mm. Das Flächengewicht der Kunststoffplatten, insbesondere der Kunststoffstrukturkammerplatten, kann bevorzugt im Bereich von 1.000 bis 2.500 g/m³, besonders bevorzugt im Bereich von 1.000 bis 2.000 g/m³ liegen.

Neben den vorbezeichneten Vorteilen hat eine erfindungsgemäße Vorrichtung, bei der das Bodenteil und die Dachteile aus Kunststoff, insbesondere aus Kunststoffstrukturkammerplatten gefertigt sind, auch den Vorteil einer sehr einfachen Verarbeitbarkeit. So kann eine Vorrichtung aus Kunststoff beispielsweise sehr einfach durchbohrt, geschnitten oder geschraubt werden. Eine entsprechend einfache Verarbeitbarkeit kann insbesondere dann beispielsweise sehr vorteilhaft sein, wenn Öffnungen oder Löcher in die Vorrichtung eingebracht werden sollen, beispielsweise um Haltemittel für Solarpaneele und/oder Wärmekollektoren an der Vorrichtung zu befestigen.

Es kann vorgesehen sein, dass das Dachteil, das zur Befestigung von Solarpaneelen und/oder Wärmekollektoren ausgebildet ist, Öffnungen zur Anordnung von Befestigungsmitteln für Solarpaneele und/oder Wärmekollektoren aufweist. Beispielsweise kann es sich bei diesen Öffnungen um Bohrungen handeln, durch die Schrauben oder sonstige Befestigungsmittel für Solarpaneele und/oder Wärmekollektoren führbar sind.

Es kann ferner vorgesehen sein, dass wenigstens eines der Dachteile, bevorzugt wenigstens das Dachteil, das nicht zur Anordnung von Solarpaneelen und/oder Wärmekollektoren ausgebildet ist, Öffnungen oder Durchbrüche zur Hinterlüftung der Vorrichtung aufweist. Diese Öffnungen oder Durchbrüche begünstigen die Luftzirkulation innerhalb der Vorrichtung, so dass der Bildung von Kondenswasser oder eines Wärmestaus in der Vorrichtung vorgebeugt werden kann. Ferner erleichtern solche Öffnungen oder Durchbrüche Reparatur- oder Wartungsarbeiten in der Vorrichtung. Gemäß einer besonders bevorzugten Ausführungsform ist die Vorrichtung einstückig ausgebildet. Die das Bodenteil sowie die Dachteile umfassende Vorrichtung ist demnach als eine einzige Komponente konfektioniert. Dies hat den besonderen Vorteil einer besonders einfachen Handhabbarkeit der Vorrichtung. Vorteilhaft an einer einstückigen Ausbildung ist ferner, dass keine Teile verloren gehen können, beispielsweise bei einem Transport der Vorrichtung.

Zur Herstellung einer solch einstückigen Vorrichtung kann vorgesehen sein, dass hierfür zunächst eine einzige Platte, insbesondere beispielsweise eine Kunststoffstrukturkammerplatte, zur Verfügung gestellt wird. Diese Platte wird anschließend zunächst entlang paralleler Knickkanten geknickt und die freien Ende anschließend miteinander verbunden. Auf diese Weise ist die erfindungsgemäße Vorrichtung besonders einfach herstellbar.

Erfindungsgemäß wird zur Herstellung einer erfindungsgemäßen Vorrichtung ein Verfahren mit folgenden Schritten vorgeschlagen:
- zur Verfügungstellung einer Kunststoffplatte mit einer rechteckigen Außenkontur;
- ausbilden von drei parallel zu zwei gegenüberliegenden Seitenkanten der Kunststoffplatte verlaufenden Knickkanten, entlang derer die Kunststoffplatte knickbar ist, derart, dass diese Knickkanten drei der vier Knickkanten der Vorrichtung bilden;
- verbinden der gegenüberliegenden, parallel zu den drei Knickkanten verlaufenden Seitenkanten der Kunststoffplatte miteinander, derart, dass diese miteinander verbundenen Seitenkanten die vierte Knickkante der vier Knickkanten der Vorrichtung bilden.

Die Knickkanten sind derart ausgebildet, dass sie ein reversibles Knicken, also ein hin- und herbewegen der über diese miteinander verbundenen Komponenten der Vorrichtung ermöglichen. Bevorzugt sind die Knickkanten als Filmscharnier ausgebildet. Die Knickkanten können beispielsweise als Materialschwächung vorgesehen sein, beispielsweise indem die Materialschwächung in eine Kunststoffplatte, insbesondere eine Kunststoffstrukturkammerplatte, eingebracht wird, beispielsweise durch eine Stanzung. Es kann auch vorgesehen sein, dass die Knickkanten durch Kaltpressschweißen erstellt sind. Bekanntermaßen versteht man unter Kaltpressschweißen beziehungsweise unter Kaltschweißen das Diffusionskleben thermoplastischer Kunststoffe mit lösemittelhaltigen Nassklebstoffen. Soweit die Dachteile und/oder das Bodenteil demnach als Kunststoffplatten ausgebildet sind, können eine oder mehrere der Knickkantender Vorrichtung mittels Kaltschweißen erstellt sein.

Wie zuvor ausgeführt, liegt ein besonderer Vorteil der erfindungsgemäßen Vorrichtung auch darin, dass sie ohne weitere Hilfsmittel unmittelbar errichtet und auf einem Untergrund aufgestellt werden kann. Um ein unbeabsichtigtes Verrücken der Vorrichtung, insbesondere durch Wind, zu vermeiden, kann vorgesehen sein, dass das Bodenteil durch Beschwerungsmittel, insbesondere beispielsweise Steine, Sand oder Kies, beschwert ist. Entsprechend kann vorgesehen sein, dass das Bodenteil zur Aufnahme, insbesondere zur Auflage von Beschwerungsmitteln ausgebildet ist.

Ferner kann erfindungsgemäß ein System aus mehreren der hierin beschriebenen Vorrichtungen vorgesehen sein, die derart nebeneinander angeordnet sind, dass die Dachteile miteinander fluchten. Die Dachteile ergänzen sich damit zu einem durchgehenden Satteldach beliebiger Länge. An diesem sind anschließend Solarpaneele und/oder Wärmekollektoren anordenbar. Um eine Ausrichtung mehrerer derart nebeneinander angeordneter Vorrichtung zu erleichtern, kann vorgesehen sein, dass die Vorrichtungen auf Haltemitteln angeordnet sind, beispielsweise Metallprofilen oder Metallschienen. Diese Haltemittel können beispielsweise auch auf einem Untergrund befestigt sein.

Ausführungsbeispiele der erfindungsgemäßen Vorrichtung sollen anhand der nachfolgenden Figurenbeschreibung näher erläutert werden.

Dabei zeigen, jeweils stark schematisiert,
- Figur 1: eine perspektivische Ansicht einer ersten Ausführungsform einer Vorrichtung schräg von der Seite,
- Figur 2: eine Ansicht der Vorrichtung nach Figur 1 von der Seite,
- Figur 3: eine Ansicht der Vorrichtung nach Figur 1 von der Seite beim Zusammenklappen,
- Figur 4: eine Ansicht der Vorrichtung nach Figur 1 von der Seite im zusammengeklappten Zustand,
- Figur 5: eine zweite Ausführungsform einer erfindungsgemäßen Vorrichtung in einer Ansicht von der Seite,
- Figur 6: eine Ansicht der Vorrichtung nach Figur 5 von der Seite im zusammengeklappten Zustand und
- Figur 7: eine Platte zur Herstellung einer erfindungsgemäßen Vorrichtung in einer Aufsicht und
- Figur 8: eine Platte nach Figur 7 in einer Ansicht von der Seite.

Die insgesamt mit dem Bezugszeichen 1 gekennzeichnete Vorrichtung weist ein Bodenteil 3 in Form einer rechteckigen Platte auf, die aus einer Kunststoffstrukturkammerplatte gefertigt ist.

An gegenüberliegenden Seitenkanten 5, 7 der Bodenplatte 3 sind zwei Dachteile 9, 11 an dem Bodenteil 3 befestigt. Die Dachteile 9, 11 weisen jeweils die Form einer rechteckigen Platte auf und sind aus einer Kunststoffstrukturkammerplatte gefertigt. Die Dachteile 9, 11 bilden die Form eines symmetrischen Satteldaches.

Beide Dachteile 9, 11 sind zur Anordnung von Solarpaneelen und/oder Wärmekollektoren ausgebildet.

Firstseitig sind die Dachteile 9, 11 entlang einer Knickkante 13, die eine Verschwenkung der Dachteile 9, 11 gegeneinander ermöglicht, miteinander verbunden. Fußseitig sind die Dachteile 9, 11 jeweils derart entlang einer Knickkante 15, 17 mit den Seitenkanten 5, 7 des Bodenteils 3 verbunden, dass jeweils eine Verschwenkung der Dachteile 9, 11 gegenüber dem Bodenteil 3 ermöglicht ist. Das Bodenteil 3 weist eine Knickkante 19 auf, entlang derer das Bodenteil 3 knickbar ist. Durch die Knickkante 19 des Bodenteils 3 ist dieses in zwei gleich große Abschnitte 3a, 3b unterteilt, wobei diese Abschnitte 3a, 3b entlang der Knickkante 19 gegeneinander verschwenkbar miteinander verbunden sind.

Sämtliche Knickkanten 13, 15, 17 und 19 der Vorrichtung 1 sind jeweils als Filmscharnier ausgebildet.

Die Knickkante 19 des Bodenteils 3 verläuft parallel zu den gegenüberliegenden Seitenkanten 5, 7 des Bodenteils 3, an dem die Dachteile 9, 11 mit dem Bodenteil 3 verbunden sind, beziehungsweise parallel zu den jeweiligen Knickkanten 15, 17, entlang derer die Dachteile 9, 11 mit dem Bodenteil 3 verbunden sind. Ferner verläuft die Knickkante 19 des Bodenteils 3 mittig des Bodenteils 3.

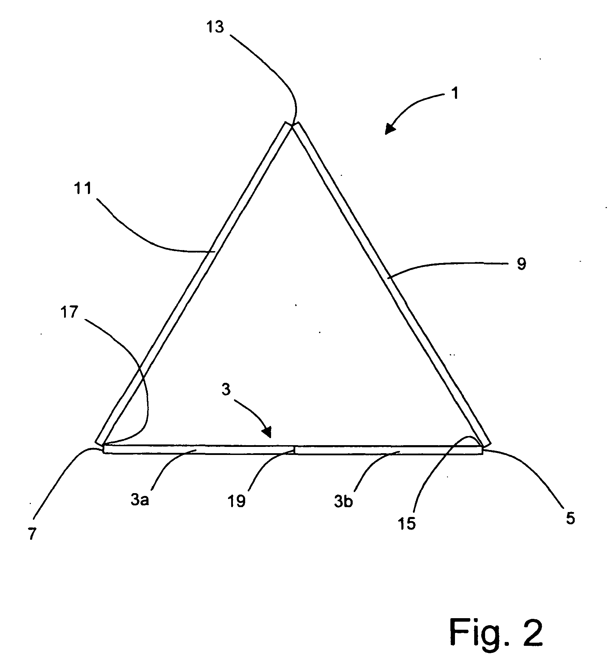

Insgesamt hat die Vorrichtung 1 im ausgeklappten Zustand damit die Form eines Kunststoffhohlprofils mit einem dreieckigen Querschnitt, was noch einmal anschaulich die Seitenansicht der Vorrichtung 1 gemäß Figur 2 verdeutlicht.

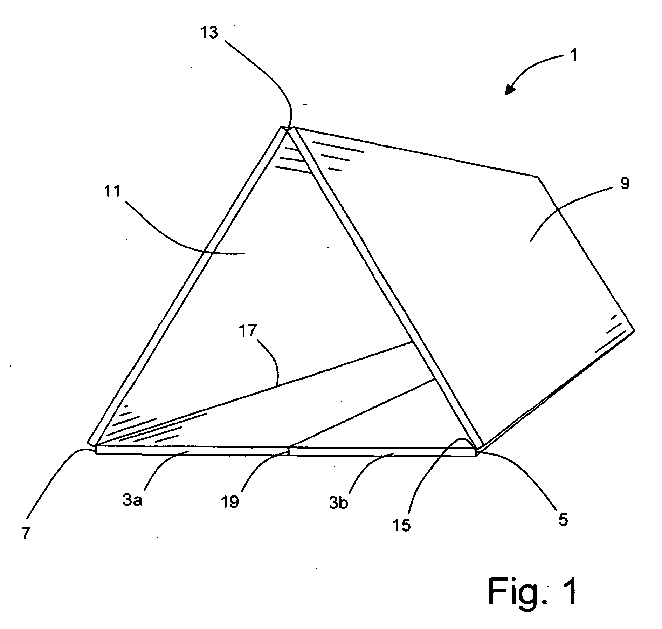

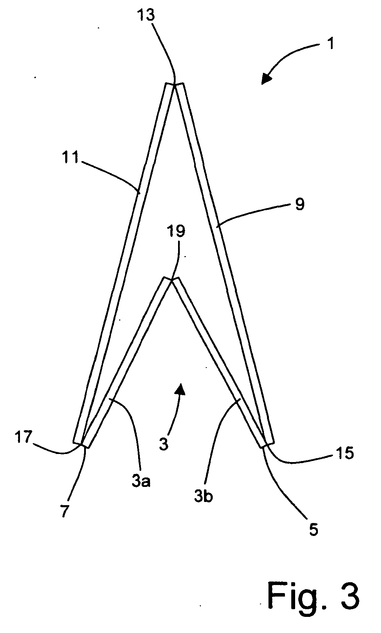

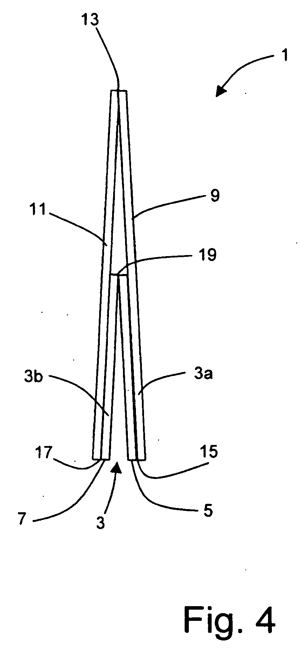

Wie Figur 3, die die Vorrichtung 1 nach Figur 1 während des Zusammenklappens zeigt, verdeutlicht, ist die Vorrichtung 1 zusammenklappbar, so dass sowohl die beiden Abschnitte 3a, 3b des Bodenteils 3, als auch die beiden Dachteile 9, 11 fast vollständig zusammengeklappt sind. Der zusammengeklappte Zustand der Vorrichtung 1 ist in Figur 4 veranschaulicht. Gut zu erkennen ist der sehr geringe Raumbedarf, den die Vorrichtung 1 im zusammengeklappten Zustand benötigt. Hierdurch ist die Vorrichtung 1 sehr platzsparend transportierbar, so dass zahlreiche Vorrichtungen 1 beim Transport auf- und/oder nebeneinander angeordnet werden können.

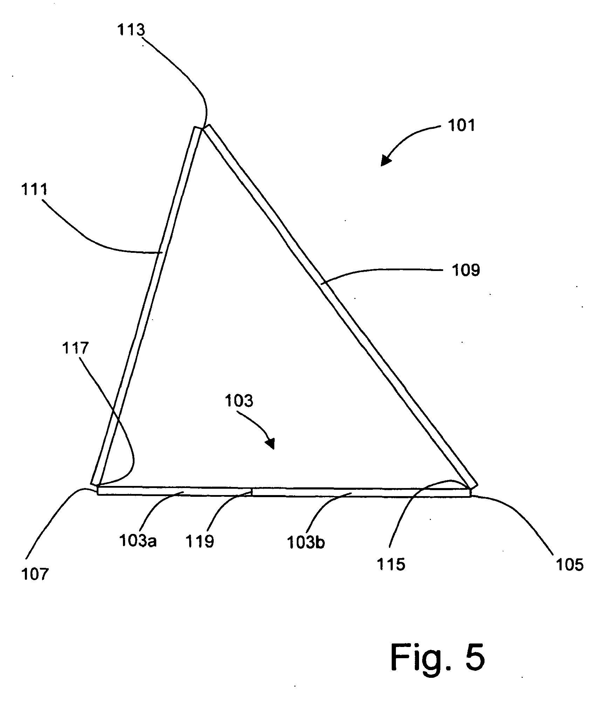

In Figur 5 ist eine alternative Ausführungsform einer erfindungsgemäßen Vorrichtung dargestellt. Bei dieser Vorrichtung, die insgesamt mit dem Bezugszeichen 101 gekennzeichnet ist, sind zwei plattenförmige Dachteile 109, 111 in Form eines asymmetrischen Satteldaches vorgesehen. Entsprechend ist die Knickkante 119 des Bodenteils 103 außermittig des Bodenteils 103 angeordnet. Im Übrigen entspricht die Vorrichtung 101 der Vorrichtung gemäß den Figuren 1 bis 4, wobei die Knickkante, über die die Dachteile 109, 111 miteinander verbunden sind, mit 113, die Knickkanten, über die die Dachteile 109, 111 mit dem Bodenteil 103 verbunden sind, mit 115 und 117, die Seitenkanten des Bodenteils 103 mit 105 und 107 und die beiden Abschnitte des Bodenteils 103, die über die Knickkante 119 miteinander verbunden sind, mit 103a und 103b bezeichnet sind.

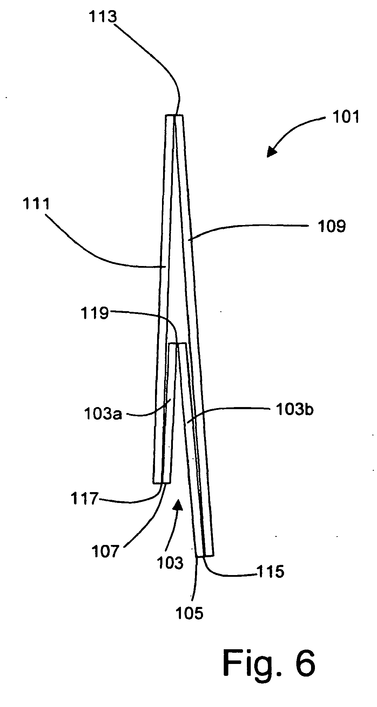

Figur 6 zeigt die Vorrichtung 101 nach Figur 5 im zusammengeklappten Zustand. Deutlich ist auch hier wiederum zu erkennen, dass die Vorrichtung 103 im zusammengeklappten Zustand nur einen geringen Raumbedarf benötigt.

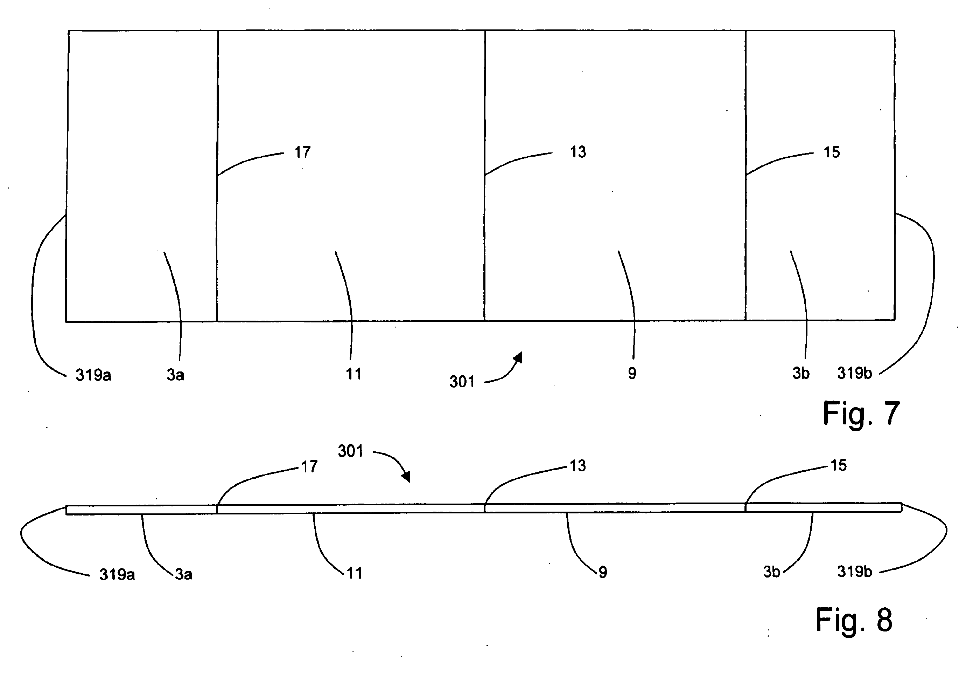

Abbildung 7 zeigt eine rechteckige Kunststoffstrukturkammerplatte 301 zur Herstellung einer Vorrichtung nach den Figuren 1 bis 4.

In den Figuren 7 und 8 sind Abschnitte der Platte 301 mit den Bezugszeichen für die Bereiche der Vorrichtung 1 nach den Figuren 1 bis 4 versehen, die sie darstellen, nachdem aus der Platte 301 die Vorrichtung 1 hergestellt worden ist.

Zunächst werden in die Platte 301 parallel zu den zwei gegenüberliegenden Seitenkanten 319a, 319b drei Knickkanten 17, 13 und 15 durch eine Stanzung eingebracht. Die drei Knickkanten 17, 13 und 15 verlaufen parallel zueinander und parallel zu den gegenüberliegenden Seitenkanten 319a, 319b. Diese drei Knickkanten 17, 13 und 15 stellen nach Herstellung der Vorrichtung 1 aus der Platte 301 die firstseitige Knickkante 13 der beiden Dachplatten 9, 11 sowie die beiden Knickkanten 17 und 19 dar, entlang derer die Dachteile 9, 11 mit dem Bodenteil 3 verbunden sind.

Anschließend werden die gegenüberliegenden Seitenkanten 319a, 319b der Kunststoffplatte 301 durch Kaltschweißen miteinander verbunden, so dass diese anschließend die Knickkante 19 des Bodenteils 3 bilden.

Die erfindungsgemäße Vorrichtung 1 ist damit allein durch die Herstellung von Knickkanten in einer Kunststoffplatte 301 sowie das anschließende Verbinden freier Enden der Kunststoffplatten herstellbar.

## Patentansprüche

1. Vorrichtung zur Anordnung von Solarpaneelen und/oder Wärmekollektoren auf einem Untergrund mit folgenden Merkmalen:
1.1 einem plattenförmigen Bodenteil (3), durch das die Vorrichtung auf einen Untergrund aufstellbar ist;
1.2 zwei plattenförmigen Dachteilen (9, 11), die in Form eines Satteldaches an dem Bodenteil (3) befestigt sind;
1.3 wenigstens eines der Dachteile (9, 11) ist zur Anordnung von Solarpaneelen und/oder Wärmekollektoren ausgebildet;
1.4 die Dachteile (9, 11) sind firstseitig entlang einer Knickkante (13), die eine Verschwenkung der Dachteile (9, 11) gegeneinander ermöglicht, miteinander verbunden;
1.5 die Dachteile (9, 11) sind fußseitig jeweils entlang einer Knickkante (15, 17), die jeweils eine Verschwenkung des betreffenden Dachteils (9, 11) gegenüber dem Bodenteil (3) ermöglicht, mit dem Bodenteil (3) verbunden;
**gekennzeichnet dadurch, daß**
1.5 das Bodenteil (3) eine Knickkante (19) auf weist, entlang derer das Bodenteil (3) knickbar ist; und daß
1.6 die Knickkante (19) des Bodenteils (3) derart angeordnet ist, dass die Vorrichtung zusammenklappbar ist.

2. Vorrichtung nach Anspruch 1 mit einem Bodenteil (3) und Dachteilen (9, 11) aus Kunststoff.

3. Vorrichtung nach Anspruch 1 mit einem Bodenteil (3) und Dachteilen (9, 11) aus wenigstens einer Kunststoffstrukturkammerplatte.

4. Vorrichtung nach Anspruch 1, die einstückig ausgebildet ist.

5. Vorrichtung nach Anspruch 1, bei der das Bodenteil (3) und die Dachteile (9, 11) jeweils eine rechteckige Außenkontur aufweisen.

6. Vorrichtung nach Anspruch 1, bei der die Dachteile (3) im Bereich gegenüberliegender Seitenkanten (5, 7) des Bodenteils (3) an diesem befestigt sind.

7. Vorrichtung nach Anspruch 1, bei der die firstseitige Knickkante (13) der Dachteile (9, 11), die fußseitigen Knickkanten (15, 17), entlang derer die Dachteile (9, 11) mit den Bodenteil (3) verbunden sind und die Knickkante (19) des Bodenteils (3) parallel zueinander verlaufen.

8. Vorrichtung nach Anspruch 1, bei der die Knickkanten (13, 15, 17, 19) als Filmscharnier ausgebildet sind.

9. Vorrichtung nach Anspruch 1, bei der wenigstens eine der Knickkanten (13, 15, 17, 19) durch Kaltschweißung erstellt ist.

10. Verfahren zur Herstellung einer Vorrichtung nach Anspruch 1 mit folgenden Schritten:
10.1 zur Verfügungstellung einer Kunststoffplatte (301) mit einer rechteckigen Außenkontur;
10.2 Ausbildung von drei parallel zu zwei gegenüberliegenden Seitenkanten (319a, 319b) der Kunststoffplatte (301) verlaufenden Knickkanten (13, 15, 17), entlang derer die Kunststoffplatte (301) knickbar ist, derart, dass diese Knickkanten (13, 15, 17) drei der vier Knickkanten der Vorrichtung bilden;
10.3 verbinden der gegenüberliegenden, parallel zu den drei Knickkanten (13, 15, 17) verlaufenden Seitenkanten (319a, 319b) der Kunststoffplatte (301) miteinander, derart, dass diese miteinander verbundenen Seitenkanten (319a, 319b) die vierte Knickkante (19) der vier Knickkanten der Vorrichtung bilden.

## Claims

1. A device for arranging solar panels and/or heat collectors on a base with the following features:
1.1 a plate-shaped base part (3), by means of which the device can be erected on a base;
1.2 two plate-shaped roof parts (9, 11), which are fastened on the base part (3) in the manner of a gable roof;
1.3 at least one of the roof parts (9, 11) is constructed for arranging solar panels and/or heat collectors;
1.4 the roof parts (9, 11) are connected to one another on a ridge side along a folded edge (13), which enables a pivoting of the roof parts (9, 11) with respect to one another;
1.5 the roof parts (9, 11) are connected to the base part (3) on a bottom side in each case along a folded edge (15, 17) which in each case enables a pivoting of the respective roof part (9, 11) with respect to the base part (3);
**characterised in that**
1.6 the base part (3) has a folded edge (19), along which the base part (3) can be folded; and **in that**
1.7 the folded edge (19) of the base part (3) is arranged in such a manner that the device is foldaway.

2. The device according to Claim 1, with a base part (3) and roof parts (9, 11) made of plastic.

3. The device according to Claim 1, with a base part (3) and roof parts (9, 11) made of at least one plastic structure chamber plate.

4. The device according to Claim 1, which is constructed in a single story.

5. The device according to Claim 1, in which the base parts (3) and the roof parts (9, 11) in each case have a rectangular outer contour.

6. The device according to Claim 1, in which the roof parts (3) are fastened to the base part (3) in the region of opposite side edges (5, 7) of the same.

7. The device according to Claim 1, in which the folded edge (13) of the roof parts (9, 11), the bottom-side folded edges (15, 17) along which the roof parts (9, 11) are connected to the base parts (3) and the folded edge (19) of the base part (3) run parallel to one another.

8. The device according to Claim 1, in which the folded edges (13, 15, 17, 19) are constructed as film hinges.

9. The device according to Claim 1, in which at least one of the folded edges (13, 15, 17, 19) is produced by means of cold welding.

10. A method for producing a device according to Claim 1, with the following steps:
10.1 providing a plastic plate (301) with a rectangular outer contour;
10.2 constructing three folded edges (13, 15, 17) running parallel to two opposite side edges (319a, 319b) of the plastic plate (301), along which folded edges the plastic plate (301) can be folded in such a manner that these folded edges (13, 15, 17) form three of the four folded edges of the device;
10.3 connecting the opposite side edges (319a, 319b) of the plastic plate (301), which run parallel to the three folded edges (13, 15, 17), to one another in such a manner that these mutually connected side edges (319a, 319b) form the fourth folded edge (19) of the four folded edges of the device.

## Revendications

1. Dispositif pour le montage de panneaux solaires et/ou de capteurs de chaleur sur un sol avec les caractéristiques suivantes:
1.1 une partie de fond (3) en forme de panneau par laquelle le dispositif peut être installé sur un sol,
1.2 deux parties de toit (9, 11) en forme de panneaux, qui sont fixées en forme d'un toit à deux pans sur la partie de fond (3),
1.3 au moins une des parties de toit (9, 11) est constituée pour le montage de panneaux solaires et/ou de capteurs de chaleur;
1.4 les parties de toit (9, 11) sont reliées entre elles au niveau du faîtage le long d'une arête de pliage (13), qui permet un pivotement des parties de toit (9, 11) l'une contre l'autre,
1.5 les parties de toit (9, 11) sont reliées à la partie de fond (3) au niveau de la base à chaque fois le long d'une arête de pliage (15, 17) qui permet à chaque fois un pivotement de la partie de toit (9, 11) par rapport à la partie de fond (3),
**caractérisé en ce que**
1.6 la partie de fond (3) présente une arête de pliage (19) le long de laquelle la partie de fond (3) est pliable et **en ce que**
1.7 l'arête de pliage (19) de la partie de fond (3) est montée de telle sorte que le dispositif est repliable.

2. Dispositif selon la revendication 1 avec une partie de fond (3) et des parties de toit (9, 11) en matière plastique.

3. Dispositif selon la revendication 1 avec une partie de fond (3) et des parties de toit (9, 11) faites d'au moins un panneau compartimenté à structure en matière plastique.

4. Dispositif selon la revendication 1 qui est constitué de façon monobloc.

5. Dispositif selon la revendication 1 pour lequel la partie de fond (3) et les parties de toit (9, 11) présentent à chaque fois un contour extérieur rectangulaire.

6. Dispositif selon la revendication 1 pour lequel les parties de toit (3) dans la zone des arêtes latérales (5, 7) opposées de la partie de fond (3) sont fixées à celle-ci.

7. Dispositif selon la revendication 1 pour lequel l'arête de pliage (13) au niveau du faîtage des parties de toit (9, 11), les arêtes de pliage (15, 17) au niveau de la base, le long desquelles les parties de toit (9, 11) sont reliées à la partie de fond (3) et l'arête de pliage (19) de la partie de fond (3) sont parallèles les unes par rapport aux autres.

8. Dispositif selon la revendication 1 pour laquelle les arêtes de pliage (13, 15, 17, 19) sont constituées en tant que charnière d'un film.

9. Dispositif selon la revendication 1 pour lequel au moins une des arêtes de pliage (13, 15, 17, 19) est élaborée par soudage à froid.

10. Procédé de fabrication d'un dispositif selon la revendication 1 avec les étapes suivantes:
10.1 mise à disposition d'un panneau en matière plastique (301) avec un contour extérieur rectangulaire;
10.2 formation de trois arêtes de pliage (13, 15, 17) passant parallèles aux deux arêtes latérales (319a, 319b) opposées du panneau en matière plastique (301) le long desquelles le panneau en matière plastique (301) est pliable de telle sorte que ces arêtes de pliage (13, 15, 17) forment trois des quatre arêtes de pliage du dispositif;
10.3 raccordement entre elles des arêtes latérales (319a, 319b) opposées du panneau en matière plastique (301), passant parallèles aux trois arêtes de pliage (13, 15 ,17), de telle sorte que ces arêtes latérales (319a, 319b) raccordées entre elles forment la quatrième arête de pliage (19) des quatre arêtes de pliage du dispositif.
